# EUROPÄISCHE PATENTSCHRIFT

(11) **EP 0 375 748 B1**
(45) Veröffentlichungstag und Bekanntmachung des Hinweises auf die Patenterteilung: **05.01.1994**
(21) Anmeldenummer: 89903456.5
(22) Anmeldetag: 22.03.1989
(51) Int. Cl.: B60R 22/42

(54) **GURTBANDKLEMMER FÜR KRAFTFAHRZEUGSICHERHEITSGURTE**
BUCKLE FOR CAR SAFETY BELTS
DISPOSITIF DE BLOCAGE POUR CEINTURE DE SECURITE DE VEHICULES AUTOMOBILES

(30) Priorität: 21.04.1988 DE 3813323; 20.07.1988 DE 3824527
(43) Veröffentlichungstag der Anmeldung: 04.07.1990
(73) Patentinhaber: GENERAL ENGINEERING (NETHERLANDS) B.V., NL-3581 CV Utrecht (NL)
(72) Erfinder: Ernst,Hans-Hellmut, D-2070 Ahrensburg (DE)
(74) Vertreter: Lorenz, Eduard
(86) Internationale Anmeldenummer: DE8900182
(87) Internationale Veröffentlichungsnummer: WO8910285

(56) Entgegenhaltungen:
- US-A- 3 871 599
- US-A- 4 570 975

## Beschreibung

Die Erfindung bezieht sich auf einen Gurtbandklemmer für Kraftfahrzeug - sicherheitsgurte der im Oberbegriff des Patentanspruchs 1 angegebenen Gattung.

Gurtbandklemmer für Kraftfahrzeugsicherheitsgurte dienen dazu, das von einem Gurtbandaufroller kommende Gurtband dann festzuhalten, wenn das Kraftfahrzeug eine vorgegebene Verzögerung erfährt oder noch stärker verzögert wird und/oder das Gurtband eine vorgegebene Beschleunigung erfährt oder noch stärker beschleunigt wird. Einerseits sollen die Gurtbandklemmer dann möglichst schnell und fest am Gurtband angreifen, um einen möglichst kurzen Gurtbandauszug auch bei derjenigen Belastung zu gewährleisten, welche das Gurtband bei einem Unfall erfährt, wenn ein schwerer Kraftfahrzeuginsasse den Sicherheitsgurt angelegt hat. Andererseits sollen sie aber auch möglichst schonend am Gurtband angreifen, um jegliche Beschädigung desselben zu vermeiden und den Gurtbandverschleiß gering zu halten, so daß eine ausreichende Gurtbandfestigkeit auch noch nach einer Vielzahl von Gurtbandklemmungen, und zwar mindestens 20.000 Gurtbandklemmungen, gegeben ist. Weiterhin sollen die Gurtbandklemmer möglichst nicht klappern, praktisch in jeder Orientierung am Kraftfahrzeug angebracht werden können und sowohl so kompakt und leicht als auch so billig und wenig störanfällig wie möglich sein, also aus nur wenigen einfachen sowie leicht zusammenzubauenden und darüberhinaus robusten Komponenten bestehen.

Die meisten Klemmer, so auch die im Serieneinsatz befindlichen, leiten die Aktivierung einer Klemmung als Folgesteuerung von einer Sensierung im Aufrollautomaten ab. Es sind aber auch Klemmer bekannt geworden - die sog. selbstsensorischen Klemmer - die unabhängig von einem Aufrollautomaten funktionieren. Zu dieser Gruppe gehört im weitesten Sinne auch der Erfindungsgegenstand.

In der DE-A-34 46 981 wird eine rein mechanische Lösung eines selbstsensorischen Klemmers beschrieben. Das eigentliche Klemmteil ist mit einem üblichen, fahrzeugsensitiven Sensor verbunden, dessen Sensorklinke im Aktivierungsfall eine Vorklemmung mit dem Gurtband herstellt. Bei Gurtbandauszug wird sodann das Klemmteil in Anlage zum Gurtband gebracht. Dieser Klemmer ist autark, d. h. von äußeren Energie- oder Steuerungsleitungen unabhängig. Aufgrund der mechanischen Ausführung läßt sich eine weitergehende Steuerungslogik außer der Festlegung einer bestimmten Ansprechschwelle nicht realisieren. So wäre es beispielsweise wünschenswert, einen Klemmer, der mit einem Gurtstrammer kombiniert ist, erst ca. 10-15 ms nach Aufprallbeginn zu aktivieren, um den vorherigen Gurtstraffungsvorgang reibungsarm und wirkungsvoll abschließen zu können.

Derartige und weitergehende Steuerungsfunktionen lassen sich nur mit einem elektrisch aktivierbaren Klemmer realisieren. Derartige Klemmer sind beispielsweise in der GB-A-14 10 655 und der gattungsbildenden DE-OS 33 43 325 bekanntgeworden. In beiden Fällen wirkt ein Stellglied, in der Regel ein elektrischer Hubmagnet, direkt auf das lastaufnehmende Klemmteil. Im Aktivierungsfall wird also das Klemmteil in die Klemmstellung verfahren. Der Nachteil hierbei besteht darin, daß doch eine erhebliche Massenträgheit beim Verfahren des Klemmteiles überwunden werden muß. Dies wirkt sich dann besonders aus, wenn minimale Aktivierungszeiten erfoderlich werden, z. B. von 3-4 ms, weil bereits mit der eingangs erwähnten Zeitverzögerung von ca. 10-15 ms operiert wurde.

Aus diesem Zusammenhang wird deutlich, daß extrem starke und entsprechend groß/schwer bauende Stellglieder erforderlich werden, wenn das Klemmteil in derart kurzer Zeit durch direkte Beaufschlagung verfahren werden muß. Ein weiterer, sehr wesentlicher Nachteil besteht darin, daß beim Ein- und Ausfahren des Klemmteiles gegen das Gurtband zerstörerische Relativbewegungen stattfinden, die das Gurtband mit der Zeit aufrauhen.

Der Erfindung liegt deshalb die Aufgabe zugrunde, einen elektrisch aktivierbaren Klemmer zu schaffen, der zur Klemmeinleitung über ein Stellglied (Aktor) nur kleine Massen bewegen muß, wobei der Aktor zur Nutzung einer intelligenten Steuerungslogik elektrisch ansteuerbar ist und bei dem die Annäherung des Klemmteiles an das Gurtband 100%ig synchron erfolgt.

Diese Aufgabe ist durch die im Patentanspruch 1 angegebenen Merkmale gelöst. Vorteilhafte Weiterbildungen des erfindungsgemäßen Gurtbandklemmers sind in den restlichen Patentansprüchen angegeben.

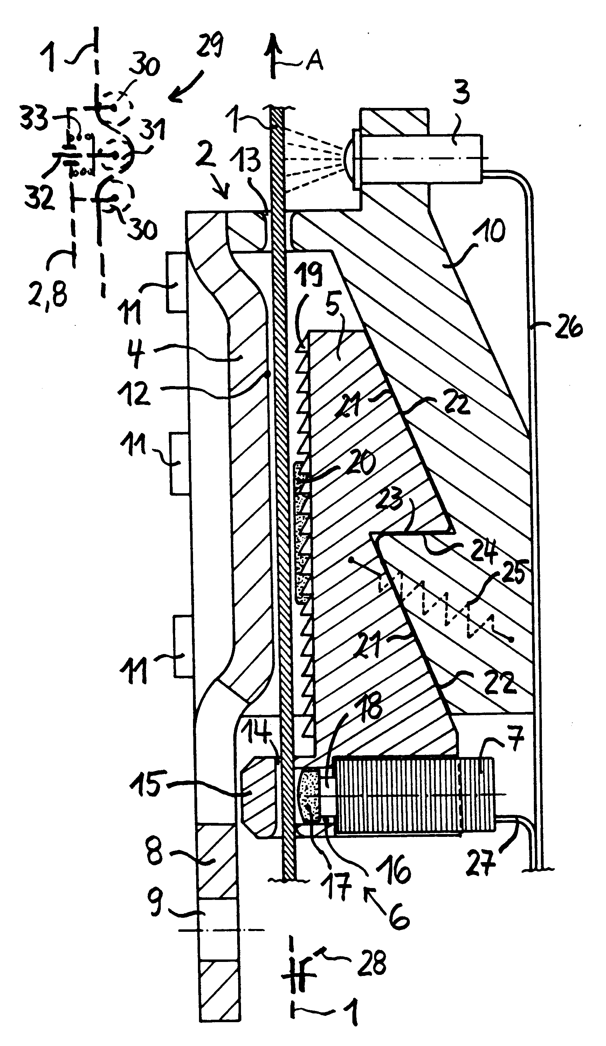

Nachstehend ist eine Ausführungsform des erfindungsgemäßen Gurtbandklemmers anhand einer Zeichnung beispielsweise beschrieben, deren einzige Figur einen Längsschnitt zeigt.

Der Gurtbandklemmer dient zum Festklemmen des aus einem nicht dargestellten Gurtbandaufroller in Richtung des Pfeils A ausziehbaren Gurtbandes 1 und weist ein Gehäuse 2 mit einem optischen Gurtbandbeschleunigungssensor 3, ein stationäres Klemmglied 4 und ein bewegliches Klemmglied 5 mit einer Klemmeinrichtung 6 zur Verbindung mit dem Gurtband 1 und mit einem elektrisch ansteuerbaren Aktor 7 zur Betätigung der Klemmeinrichtung 6 auf. Das Gehäuse 2 besteht aus einer Platte 8 mit einer Bohrung 9 zur Befestigung des Gurtbandklemmers am Kraftfahrzeug und einem Aufnahmekörper 10 für das bewegliche Klemmglied 5. Der Aufnahmekörper 10 und die Platte 8 sind mittels Nieten 11 miteinander verbunden. Das stationäre Klemmglied 4 ist von einer zum Gurtband 1 hin gerichteten Auswölbung der Platte 8 gebildet und weist eine glatte Klemmfläche 12 auf, welche eben ist und parallel zum Gurtband 1 verläuft. Letzteres erstreckt sich zwischen dem stationären Klemmglied 4 und dem beweglichen Klemmglied 5 sowie unterhalb und oberhalb derselben durch die Klemmeinrichtung 6 des beweglichen Klemmgliedes 5 bzw. einen Querschlitz 13 des Aufnahmekörpers 10 hindurch, an welchem der optische Sensor 3 angebracht ist.

Auch das bewegliche Klemmglied 5 ist mit einem vom Gurtband 1 durchsetzten Querschlitz 14 versehen, welcher auf der dem stationären Klemmglied 4 zugewandten Gurtbandseite eine Klemmleiste 15 der Klemmeinrichtung 6 definiert und in welchen auf der anderen Gurtbandseite eine Ausnehmung 16 des beweglichen Klemmgliedes 5 mündet. In letzterer ist ein Klemmkopf 17 der Klemmeinrichtung 6 des beweglichen Klemmgliedes 5 mittels des Aktors 7 über einen den Klemmkopf 17 tragenden Stößel 18 senkrecht zum Gurtband 1 verschiebbar.

Der Aktor 7 ist neben der Klemmeinrichtung 6 des beweglichen Klemmgliedes 5 an demselben angebracht, und zwar auf der der Klemmleiste 15 abgewandten Seite des Klemmkopfes 17 sowie ausgerichtet auf dessen Stößel 18. Es kann ein piezoelektrischer oder ein magnetostriktiver Aktor 7 vorgesehen sein, ebenso wie es möglich ist, einen elektrischen Linearkleinmotor oder einen elektrischen Hubmagnet als Aktor 7 vorzusehen.

Das bewegliche Klemmglied 5 weist auf der dem Gurtband 1 zugewandten Seite Gurtbandgreifzähne 19 sowie ein über dieselben vorstehendes, elastisch verformbares Kissen 20 auf und ist keilförmig ausgebildet, nämlich als zweistufiger Keil. Das bewegliche Klemmglieds ist mit zwei zueinander parallelen Schrägflächen 21 versehen, welche jeweils an einer entsprechenden Schrägfläche 22 des Gehäuses 2 bzw. des Aufnahmekörpers 10 anliegen und ein Sägezahnprofil des beweglichen Klemmgliedes 5 auf dessen dem Gurtband 1 abgewandter Rückseite definieren. Das bewegliche Klemmglied 5 ist aus der gezeigten Lösestellung, in welcher es mit seiner rückwärtigen Stufe 23 zwischen den beiden Schrägflächen 21 an der Stufe 24 zwischen den beiden Schrägflächen 22 des Gehäuses 2 bzw. des Aufnahmekörpers 10 anliegt, entgegen der Wirkung mindestens einer Rückstellfeder 25 entlang des Gurtbandes 1 in Richtung des Pfeils A in die Klemmstellung verschiebbar. Die bzw. jede Rückstellfeder 25 greift einerseits am beweglichen Klemmglied 5 und andererseits am Gehäuse 2 bzw. dessen Aufnahmekörper 10 für das bewegliche Klemmglied 5 an.

Der dargestellte Gurtbandklemmer funktioniert folgendermaßen. Bei Überschreiten einer vorgegebenen Fahrzeugverzögerung wird der Klemmkopf 17 der Klemmeinrichtung 6 des beweglichen Klemmgliedes 5 gegen die vor dem Klemmkopf 17 auf der anderen Gurtbandseite quer zum Gurtband 1 verlaufende Klemmleiste 15 zu gedrückt, um das Gurtband 1 einzuklemmen und das bewegliche Klemmglied 5 fest mit demselben zu verbinden, wozu bei einer Gurtbanddicke von 1,0 bis 1,1 mm und einem Abstand von 1,5 mm zwischen dem Klemmkopf 17 und der Klemmleiste 15 ein Klemmkopfhub von 1 mm ausreicht. Der Gurtbandklemmer befindet sich dann in einem Klemmbereitschaftszustand, aus welchem er augenblicklich in den Klemmzustand übergeht, wenn am Gurtband 1 gezogen wird und es sich in Richtung des Pfeils A bewegt, da es dabei das bewegliche Klemmglied 5 mitnimmt und entgegen der Wirkung der Rückstellfeder bzw. Rückstellfedern 25 in die Klemmstellung bewegt. Im Zuge dieser Bewegung kommt das bewegliche Klemmglied 5 zunächst nur mit dem Kissen 20 am Gurtband 1 zur Anlage, um einen entsprechenden Reibschluß zu bewirken. Die Gurtbandgreifzähne 19 werden erst dann wirksam, wenn das Kissen 20 bei weiterer Bewegung des Klemmgliedes 5 zusammen mit dem Gurtband 1 in Richtung des Pfeils A infolge eines entsprechenden Zuges am Gurtband 1 ausreichend weit zusammengedrückt worden ist, wobei die Gurtbandgreifzähne 19 umso tiefer in das Gurtband 1 eindringen, je stärker der Zug am Gurtband 1 ist und je weiter das Klemmglied 5 sich aus der dargestellten Lösestellung bewegt hat.

Das bewegliche Klemmglied 5 greift in jedem Fall äußerst schonend am Gurtband 1 an, weil seine Zustellbewegung immer vollkommen synchron mit der Gurtbandbewegung erfolgt. Auch dann, wenn die Gurtbandgreifzähne 19 des beweglichen Klemmgliedes 5 wirksam werden, wird das Gurtband 1 weder aufgerauht noch beschädigt, da keinerlei Schlupf oder Relativbewegung zwischen demselben und dem Klemmglied 5 vorhanden ist und dessen Gurtbandgreifzähne 19 punktförmig in das Gurtband 1 eingreifen. Darüberhinaus kann das bewegliche Klemmglied 5 sehr schnell und praktisch verzögerungsfrei in die Klemmstellung bewegt werden, weil es aufgrund seiner Ausbildung als mehrstufiger Keil nur eine verhältnismäßig geringe Masse aufweist.

Die Klemmeinrichtung 6 des beweglichen Klemmgliedes 5 kann auch gurtbandsensitiv ausgelöst werden, um das Klemmglied 5 mit dem Gurtband 1 zu verbinden, so daß sich der Klemmbereitschaftszustand des Gurtbandklemmers ergibt. Dazu dient der gehäusefeste optische Sensor 3, welcher die Bewegung des Gurtbandes 1 überwacht und dann ein elektrisches Signal zur Aktivierung der Klemmeinrichtung 6 liefert, wenn sich das Gurtband 1 bewegt und dabei eine vorgegebene Gurtbandbeschleunigung überschritten wird. Die optische Abtastung des Gurtbandes 1 durch den mit einer elektrischen Leitung 26 für sein Ausgangssignal versehenen Gurtbandbeschleunigungssensor 3 kann beispielsweise mit Hilfe des von den Erhebungen und Vertiefungen des Gurtbandgewebes bewirkten optischen Musters und/oder mit Hilfe besonderer Gurtbandmarkierungen erfolgen.

Weder bei der fahrzeugsensitiven noch bei der gurtbandsensitiven Aktivierung des Gurtbandklemmers wird dessen bewegliches Klemmglied 5 zur Anlage am Gurtband 1 verstellt, sondern nur der Klemmkopf 17 der Klemmeinrichtung 6 des Klemmgliedes 5. Letzteres wird vielmehr durch das Gurtband 1 zur Anlage an demselben bewegt, und zwar erst dann, wenn eine entsprechende Gurtbandzugspannung vorliegt. Somit ist aufgrund der geringen Masse des Klemmkopfes 17 nur eine geringe Kraft zur schnellen Bewegung desselben und zur schnellen Gurtbandklemmeraktivierung erforderlich, welcher auch der geringe Klemmkopfhub zugute kommt, so daß der Aktor 7 klein und leicht sein kann. Weiterhin wird das Gurtband 1 zusätzlich dadurch geschont, daß es selbst bei aktiviertem Gurtbandklemmer nur dann mit dessen Klemmgliedern 4 und 5 in Berührung kommt, wenn es mit einer entsprechenden Zugkraft belastet wird.

Um jegliches Klappern des Gurtbandklemmers zu vermeiden, wenn der zugehörige Kraftfahrzeugsicherheitsgurt nicht angelegt ist, ist die Klemmeinrichtung 6 des beweglichen Klemmgliedes 5 in den Klemmzustand zur reib- und/oder formschlüssigen Kopplung des Klemmgliedes 5 mit dem Gurtband 1 federbelastet und mittels des Aktors 7 zur Freigabe des Gurtbandes 1 betätigbar. Der Klemmkopf 17 der Klemmeinrichtung 6 wird also normalerweise durch eine nicht dargestellte Feder gegen das Gurtband 1 gedrückt und nur dann mittels des Aktors 7 entgegen der Wirkung der Federbelastung vom Gurtband 1 wegbewegt, wenn der Aktor 7 über eine elektrische Leitung 27 mit Strom beaufschlagt wird, um nur so lange abgehoben zu bleiben, wie die Strombeaufschlagung des Aktors 7 andauert.

Die Stromzufuhr zum Aktor 7 wird so gesteuert, daß sie nur beim Sicherheitsgurtanlegen erfolgt und danach aufrechterhalten bleibt, um bei jeder Fahrzeugverzögerung und/oder Gurtbandbeschleunigung oberhalb des vorgegebenen Grenzwertes für eine vorgegebene Zeitspanne unterbrochen zu werden. Diese Steuerung kann mit Hilfe eines Kraftfahrzeug-Bordcomputers erfolgen, welcher an einen elektrischen Schalter in dem mit dem Sicherheitsgurt versehenen Kraftfahrzeugsitz zur Meldung dessen, daß eine Person darauf Platz genommen hat, einen elektrischen Schalter im Sicherheitsgurtschloß zur Meldung dessen, daß es geschlossen worden ist, einen kraftfahrzeugfesten Fahrzeugverzögerungssensor und die elektrische Leitung 26 des optischen Gurtbandbeschleunigungssensors 3 angeschlossen ist.

Der dem Gurtbandklemmer vorgeordnete Gurtbandaufroller braucht keinerlei Gurtbandhaltekräfte aufzunehmen und kann entsprechend leicht gebaut werden. Um eine übermäßige Beanspruchung des Gurtbandaufrollers zu vermeiden, wenn die Klemmeinrichtung 6 des beweglichen Klemmgliedes 5 des Gurtbandklemmers nicht fahrzeugsensitiv und/oder gurtbandsensitiv aktiviert ist und am Gurtband 1 gewaltsam mit großer Kraft gezogen wird, kann dafür gesorgt werden, daß der Gurtbandklemmer stets wirksam wird, wenn das Gurtband 1 annähernd vollständig aus dem Gurtbandaufroller herausgezogen worden ist. Dazu kann das Gurtband 1 im Bereich des am Gurtbandaufroller befestigten Endes mit einer die Klemmeinrichtung 6 über den optischen Sensor 3 auslösenden Markierung oder einem Mitnehmer 28 für das Klemmglied 5 versehen sein, welcher blattfederartig ausgebildet ist und ohne weiteres zusammen mit dem Gurtband 1 im Gurtbandaufroller aufgewickelt werden kann. Wie in der Zeichnung ebenfalls mit gestrichelten Linien angedeutet, kann statt des optischen Sensors 3 auch ein Sensor 29 mit zwei äußeren Rollen 30 auf der einen und einer mittleren Rolle 31 auf der anderen Gurtbandseite vorgesehen sein, welche sich quer zum Gurtband 1 erstrecken und an demselben anliegen. Die beiden äußeren Rollen 30 sind am Gehäuse 2 bzw. dessen Platte 8 drehbar gelagert, die mittlere Rolle 31 an einem verschiebbaren Träger 32, so daß sie sich senkrecht zum Gurtband 1 bewegen kann. Der Träger 32 ist durch eine Feder 33 auf das Gurtband 1 zu belastet. Der Sensor 29 weist ferner einen nicht dargestellten Drehgeber oder Schalter zur Abgabe eines die jeweilige Gurtbandbewegung bzw. -zugspannung repräsentierenden elektrischen Signals auf, welcher mit der mittleren Rolle 31 bzw. mit deren Träger 32 zusammenwirkt.

Der dargestellte und geschilderte Gurtbandklemmer kann auch noch in anderer Hinsicht vielfach abgewandelt werden. So müssen die Klemmeinrichtung 6 und der Aktor 7 nicht unbedingt am unteren Ende des beweglichen Klemmgliedes 5 angeordnet sein, sondern können sie sich auch an anderer Stelle befinden, insbesondere am oberen Ende des Klemmgliedes 5, ebenso wie der Sensor 3 bzw. 29 für das Gurtband 1 anderswo angeordnet werden kann. Die Klemmeinrichtung 6 des beweglichen Klemmgliedes 5 kann anders ausgebildet werden und muß nicht unbedingt federbelastet oder in den Klemmzustand federbelastet sein. Auch der Aktor 7 des Klemmgliedes 5 kann anders angesteuert werden, ebenso wie es bei der geschilderten elektrischen Aktoransteuerung in Verbindung mit dem federnden, als Gurtbandpuffer wirkenden Sensor 29 möglich ist, besondere Maßnahmen zu treffen, um die Stromzufuhr zum Aktor 7 bei angelegtem Sicherheitsgurt zur Verringerung des Stromverbrauchs immer dann zu unterbrechen, wenn das Gurtband 1 sich während einer vorgegebenen Zeitspanne von beispielsweise 2 bis 3 sec im Sensor 29 nicht bewegt hat, und den Aktor 7 sofort wieder mit Strom zu beaufschlagen, wenn das Gurtband 1 sich wieder im Sensor 29 bewegt. Wegen der wesentlich reduzierten Gurtbandklemmungen und der dann vollkommen synchronen Bewegung des Gurtbandes 1 und des beweglichen Klemmgliedes 5 ist es nicht unbedingt erforderlich, letzteres mit dem Kissen 20 zum Schutz des Gurtbandes 1 zu versehen, in welches die Gurtbandgreifzähne 19 des Klemmgliedes 5 auch nur im Falle eines Unfalles vollständig eindringen. Auch kann das bewegliche Klemmglied 5 mehr als zwei Schrägflächen 21 aufweisen, ebenso wie es nicht unbedingt als Keil ausgebildet sein muß, sondern auch beispielsweise von einem Klemmhebel oder einer verschwenkbaren Klemmbacke gebildet sein kann. Ferner können beide Klemmglieder 4 und 5 beweglich angeordnet und mit je einer eigenen Klemmeinrichtung 6 nebst Aktor 7 versehen oder miteinander zur gemeinsamen Bewegung im Gehäuse 2 gekuppelt werden.

## Patentansprüche

1. Gurtbandklemmer für Kraftfahrzeugsicherheitsgurte mit einem stationären Klemmglied (4) auf der einen und einem beweglichen Klemmglied (5) auf der anderen Gurtbandseite, welches mittels eines Aktors (7) bei Überschreiten einer vorgegebenen Fahrzeugverzögerung mit dem Gurtband (1) zur Mitnahme durch dasselbe entgegen der Wirkung einer Federbelastung in die Klemmstellung verbringbar ist,
**dadurch gekennzeichnet**,
daß an dem die Hauptlast aufnehmenden Klemmglied (5) eine über eine externe Steuerungslogik elektrisch aktivierbare Vorklemmeinrichtung (6) angeordnet ist, die einen mittels des Aktors (7) im wesentlichen senkrecht zum Gurtband (1) verschiebbarem Klemmkopf (17) und eine Klemmleiste (15) am lastaufnehmenden Klemmglied (5) aufweist, welche sich vor dem Klemmkopf (17) auf der anderen Gurtbandseite quer zum Gurtband (1) erstreckt.

2. Gurtbandklemmer nach Anspruch 1, dadurch gekennzeichnet, daß das bewegliche Klemmglied (5) keilförmig ausgebildet und entlang des Gurtbandes (1) verschiebbar ist.

3. Gurtbandklemmer nach Anspruch 1, dadurch gekennzeichnet, daß das bewegliche Klemmglied (5) als mehrstufiger Keil ausgebildet ist und mehrere zueinander parallele, ein Sägezahnprofil definierende Schrägflächen (21) aufweist.

4. Gurtbandklemmer nach Anspruch 1, dadurch gekennzeichnet, daß die Klemmeinrichtung (6) in den Klemmzustand mittels des Aktors (7) und zur Freigabe des Gurtbandes (1) aufgrund Federkraft bringbar ist.

## Claims

1. Belt clamp for motor vehicle safety belts with a stationary clamping element (4) on one side of the belt band, and a moving clamping element (5) on the other side, which moving clamping element (5), in the event of a predetermined vehicle deceleration value being exceeded, can be brought by means of an actuator (7) into clamping position with the belt band (1) for entrainment by the latter against the effect of a spring load,
characterized in that
arranged at the clamping element (5) absorbing the main load is a preclamping device (6) which can be electrically activated via an external control logic operation, said preclamping device (6) exhibiting a clamping head (17) which can be shifted by the actuator (7) in an essentially perpendicular direction in respect of the belt band (1), and a clamping bar (15) at the load-absorbing clamping element (5), said clamping bar (15) extending in front of the clamping head (17) on the other side of the belt band and transverse to the belt band (1).

2. Belt clamp according to Claim 1, characterized in that the moving clamping element (5) is of wedge-shaped design and can be displaced along the belt band (1).

3. Belt clamp according to Claim 1, characterized in that the moving clamping element (5) is designed as a multi-stepped wedge and exhibits several mutually parallel inclined faces (21) which define a sawtooth profile.

4. Belt clamp according to Claim 1, characterized in that the clamping device (6) can be brought into its clamping position by means of the actuator (7) and is activated by spring power to release the belt band (1).

## Revendications

1. Dispositif de serrage de ceinture pour ceintures de sécurité automobile, comportant un élément de serrage (4) stationnaire d'un côté de la ceinture et un élément de serrage (5) mobile de l'autre côté de la ceinture, qui au moyen d'un actuateur (7) peut être amené en position de serrage avec la ceinture (1) pour être entraîné par celle-ci contre l'effet d'une charge de ressort lorsqu'une décélération prédéterminée du véhicule est dépassée,
**caractérisé en ce**
qu'un dispositif de pré-serrage (6), pouvant être activé électriquement par l'intermédiaire d'une logique de commande extérieure, est disposé sur l'élément de serrage (5) absorbant la charge principale, dispositif de pré-serrage qui présente une tête de serrage (17) pouvant être déplacée dans le sens substantiellement perpendiculaire par rapport à la ceinture (1) moyennant l'actuateur (7) et une barre de serrage (15) sur l'élément de serrage (5) absorbant la charge, qui s'étend de l'autre côté de la ceinture transversalement par rapport à la ceinture (1) en amont de la tête de serrage (17).

2. Dispositif de serrage de ceinture selon la revendication 1, caractérisé en ce que l'élément de serrage (5) mobile présente une forme conique et peut être déplacé le long de la ceinture (1).

3. Dispositif de serrage de ceinture selon la revendication 1, caractérisé en ce que l'élément de serrage (5) mobile est formé comme cône à plusieurs gradins et présente plusieurs surfaces obliques (21) réciproquement parallèles et définissant un profil en dents de scie.

4. Dispositif de serrage de ceinture selon la revendication 1, caractérisé en ce que le dispositif de serrage (6) peut être amené en état de serrage au moyen de l'actuateur (7) et est activé par la force du ressort pour libérer la ceinture (1).
